# FASCICULE DE BREVET EUROPEEN

(11) **EP 1 780 080 B1**
(45) Date de publication et mention de la délivrance du brevet: **20.07.2011**
(21) Numéro de dépôt: 06291636.6
(22) Date de dépôt: 20.10.2006
(51) Int. Cl.: B60Q 1/08

(54) **Procédé de contrôle d'une opération de commutation de faisceaux lumineux**
Überwachungsverfahren für die Umschaltung eines Lichtsbündels
Method to control a switching procedure of a light beam

(30) Priorité: 25.10.2005 FR 0510891
(43) Date de publication de la demande: 02.05.2007
(73) Titulaire: VALEO VISION, 93012 Bobigny Cedex (FR)
(72) Inventeur: Wiegand, Boris, 78170 La Celle Saint Cloud (FR); Natter, Emilien, 94120 Fontenay Sous Bois (FR)

(56) Documents cités:
- WO-A-03/053737
- WO-A-2004/034183
- US-A- 3 319 116
- US-A- 5 990 469
- US-A1- 2003 138 132

## Description

La présente invention a pour objet un procédé de contrôle d'une opération de commutation d'un faisceau lumineux, notamment de type AFS (Adaptive Front Lighting System en langue anglaise, pour Système d'éclairage frontal adaptatif) produit par un dispositif projecteur équipant un véhicule automobile. Elle a essentiellement pour but de proposer une solution afin de simplifier, pour le conducteur d'un véhicule automobile, une opération de choix d'un faisceau lumineux parmi une pluralité de faisceaux lumineux disponibles, tout en s'assurant que le choix d'un tel faisceau lumineux correspond effectivement à des conditions de circulation particulières.

Le domaine de l'invention est, d'une façon générale, celui des projecteurs de véhicule automobile. Dans ce domaine, on connaît différents types de dispositifs projecteurs, parmi lesquels on trouve essentiellement :
- des feux de position, d'intensité et de portée faible ;
- des feux de croisement, ou codes, d'intensité plus forte et de portée sur la route avoisinant 70 mètres, qui sont utilisés essentiellement la nuit et dont la répartition du faisceau lumineux est telle qu'elle permet de ne pas éblouir le conducteur d'un véhicule croisé ;
- des feux de route longue portée, et des feux de complément de type longue portée, dont la zone de vision sur la route avoisine 200 mètres, et qui doivent être éteints lorsque l'on croise un autre véhicule afin de ne pas éblouir son conducteur ;
- des projecteurs anti-brouillard ;
- des projecteurs bimodes, qui cumulent les fonctions de feux de croisement et de feux longue portée.

Cependant, les dispositifs projecteurs classiques qui viennent d'être évoqués, plus particulièrement ceux qui sont utilisés comme feux de croisement, produisent des faisceaux lumineux qui sont perfectibles lorsque ces dispositifs projecteurs sont utilisés dans certaines conditions. Ainsi, un conducteur est parfois confronté à des situations dans lesquelles le faisceau lumineux produit par les codes de son véhicule dans leur configuration classique pourrait être orienté, réparti de façon meilleure pour aborder de telles situations ; par configuration classique d'un dispositif de type code, on désigne la configuration dans laquelle il se trouve lorsqu'il ne présente pas de fonctions avancées, dont certains exemples vont être mentionnés ultérieurement.

Par exemple, lorsqu'un véhicule aborde un virage, les projecteurs continuent à éclairer droit devant eux alors qu'il serait plus judicieux d'orienter le faisceau lumineux dans la direction du virage emprunté.

Par ailleurs, lorsqu'un véhicule est sur une autoroute, il apparaît judicieux de concentrer le flux lumineux du feu de croisement au niveau de l'axe optique du dispositif projecteur, afin de faire porter un peu plus loin le faisceau produit.

Toujours sur autoroute, il peut être intéressant d'orienter une partie du faisceau lumineux vers des points particuliers, appelés points de portique, de façon à augmenter le flux lumineux émis vers les panneaux de signalisation d'autoroute sous lesquels le véhicule passe.

A l'opposé, lorsqu'un véhicule circule en ville, il n'est pas nécessaire de faire porter le faisceau lumineux aussi loin que sur des routes dégagées, mais il peut être judicieux de mieux éclairer les voies de circulation sur les côtés du véhicule, et donc d'étaler le faisceau lumineux produit à l'avant du véhicule.

Enfin, en cas d'intempérie de type forte averse ou brouillard, le conducteur peut être ébloui par les reflets des faisceaux lumineux produits par ses propres projecteurs. Il est alors judicieux d'étaler en largeur le faisceau lumineux et de diminuer légèrement le flux lumineux envoyé vers le bas.

Ainsi, en complément des fonctions projecteurs principales classiques, notamment codes et routes, différents perfectionnements sont progressivement apparus. On a ainsi vu se développer des fonctions élaborées, ou fonctions avancées, parmi lesquelles on trouve notamment:
- une fonction dite BL (Bending Light en anglais pour lumière virage), qui peut se décomposer en une fonction dite DBL (Dynamic Bending Light en anglais pour lumière virage mobile) et une fonction dite FBL (Fixed Bending Light en anglais pour lumière virage fixe).
   La fonction DBL permet de modifier l'orientation d'un faisceau lumineux produit par une source lumineuse, de telle sorte que lorsque le véhicule aborde un virage, la route soit éclairée de façon optimale.
   La fonction FBL a pour vocation d'éclairer progressivement le bas-côté de la route lorsque le véhicule effectue un virage ; à cet effet, on prévoit une source lumineuse supplémentaire qui vient compléter progressivement les feux de croisement ou de route lors de la négociation d'un virage ;
- une fonction dite Town Light en anglais, pour feu de ville. Cette fonction assure l'élargissement d'un faisceau de type feu de croisement tout en diminuant légèrement sa portée ; elle est obtenue au moyen d'un dispositif projecteur de type code dans une configuration spécifique à la circulation en ville;
- une fonction dite Motorway Light en anglais, pour feu d'autoroute. Cette fonction assure une augmentation de la portée d'un feu de croisement ; elle est obtenue au moyen d'un dispositif projecteur de type code dans une configuration spécifique à la circulation sur autoroute;
- une fonction dite Overhead Light en anglais, pour feu surélevé. Cette fonction assure une modification d'un faisceau de feu de croisement de telle sorte que des portiques situés en hauteur sont éclairés de façon satisfaisante au moyen des feux de croisement ;
- une fonction dite AWL (Adverse Weather Light en anglais, pour feu de mauvais temps). Cette fonction assure une modification d'un faisceau de feu de croisement de telle sorte que le conducteur n'est pas ébloui par un reflet de son propre projecteur.

Les fonctions BL, AWL, Town Light, Motorway Light et Overhead Light sont regroupées sous le nom de fonctions AFS.

Afin de mettre à disposition du conducteur ces fonctionnalités avancées, on a proposé, dans l'état de la technique différentes solutions. Ces solutions permettent d'obtenir différents faisceaux lumineux remplissant les différentes fonctions AFS, en plus du faisceau lumineux dans sa configuration classique. La sélection des fonctions AFS est obligatoirement effectuée de manière automatique, en dehors de toute intervention du conducteur. Devant la multiplicité des fonctions AFS, qui s'ajoute à la multiplicité des fonctions classiques, plusieurs paramètres peuvent être pris en compte pour déterminer quelle est la fonction la plus appropriée. Ces différents paramètres sont fournis par des capteurs de différentes grandeurs.

On connaît par exemple du document WO 03/053737 un système de commande des projecteurs d'un véhicule automobile, qui comporte un capteur utilisé pour mesurer la luminosité extérieure au véhicule, et pour détecter si cette luminosité comporte une composante alternative de 100 Hz ou 120 Hz, provenant de l'éclairage urbain. Si le niveau de lumière ambiante est élevé, si cette lumière ambiante comporte une composante alternative et si la vitesse du véhicule est faible, par exemple inférieure à 50 km/h, alors il est vraisemblable que le véhicule circule dans une ville dotée d'un éclairage urbain, et la fonction dite Town Light peut être activée.

Le règlement AFS autorise une version minimale selon laquelle un seul paramètre est exclusivement utilisé, à savoir la vitesse du véhicule, comme critère de changement de faisceau. Cette solution minimaliste provoque parfois des comportements du système d'éclairage du véhicule qui peuvent être perturbants pour le conducteur, et qui peuvent alors entraîner une déstabilisation de ce dernier, déstabilisation qui peut nuire à sa conduite.

En réponse à ce problème, on propose, dans l'invention, de vérifier la compatibilité du faisceau lumineux, vers lequel le véhicule s'apprête à commuter avec un environnement dans lequel le véhicule évolue ; dans l'invention, on détermine si le véhicule évolue dans un milieu urbanisé (par exemple une ville ou une autoroute) avant d'autoriser la commutation du faisceau lumineux produit par le véhicule vers une fonction AFS spécifique à ce milieu, correspondant, selon l'invention, à la configuration spécifique à la circulation sur autoroute des dispositifs projecteurs de type codes. A cet effet, on équipe le véhicule d'un capteur produisant une information relative à la présence ou à l'absence, au voisinage du véhicule, d'une lumière artificielle produite par un courant alternatif, et on prend cette information en considération avant de procéder à la commutation. Le procédé selon l'invention peut par ailleurs être mis en oeuvre lorsque le véhicule est équipé ou non d'éléments d'assistance à la commutation de faisceaux lumineux permettant une certaine automatisation des opérations de commutation.

L'invention concerne donc essentiellement un procédé de contrôle d'une opération de commutation de faisceaux lumineux, ladite commutation consistant en un passage d'un premier faisceau lumineux à un deuxième faisceau lumineux suite à la détection d'au moins un événement déclencheur de la commutation, le premier faisceau lumineux et le deuxième faisceau lumineux étant produits par au moins un dispositif projecteur d'un véhicule automobile, le procédé comportant notamment les différentes étapes consistant à :
- produire (101), au moyen d'un capteur disposé dans, ou sur, le véhicule automobile, une première information relative à une présence ou une absence, au voisinage dudit véhicule, de lumière artificielle produite par un courant alternatif;
- intégrer, comme paramètre de commutation, la première information produite.

Selon l'invention, le premier faisceau lumineux est un faisceau lumineux produit par un dispositif projecteur de type code dans sa configuration classique, et le deuxième faisceau lumineux est un faisceau lumineux produit par un dispositif projecteur de type code dans sa configuration spécifique à la circulation sur autoroute, l'opération de commutation du premier faisceau lumineux au deuxième faisceau lumineux étant effectuée, suite à la détection d'au moins un événement déclencheur de la commutation, uniquement si la première information produite établit, au voisinage du véhicule, l'absence ou la trop faible présence de lumière artificielle produite par un courant alternatif.

Le procédé selon l'invention peut également présenter, outre les caractéristiques principales énoncées dans le paragraphe précédent, une ou plusieurs des caractéristiques secondaires suivantes :
- le procédé comporte les étapes supplémentaires consistant à :
   - produire, au sein du véhicule automobile, une deuxième information relative à un niveau, au voisinage dudit véhicule, d'éclairement par de la lumière artificielle produite par un courant alternatif ;
   - intégrer, comme paramètre de commutation, la deuxième information produite ;
   - l'événement déclencheur de la commutation est une détection d'une vitesse instantanée du véhicule supérieure à une valeur seuil ;
   - l'événement déclencheur de la commutation est une action du conducteur sur un élément spécifique à la commutation de faisceaux lumineux ;
   - le capteur produisant la première information est une photodiode ;
   - le capteur produisant la première information est une photorésistance ;
   - le capteur produit une information établissant la absence, au voisinage dudit véhicule, de lumière artificielle produite par un courant alternatif de fréquence supérieure ou égale à trente hertz ;
   - le capteur produit une information établissant la absence, au voisinage dudit véhicule, de lumière artificielle produite par un courant alternatif de fréquence égale à cinquante hertz, à plus ou moins dix pour cent ;
   - l'opération de commutation du premier faisceau lumineux au deuxième faisceau lumineux n'est effectuée que si le niveau, au voisinage dudit véhicule, d'éclairement par de la lumière artificielle produite par un courant alternatif est supérieur à trois lux.

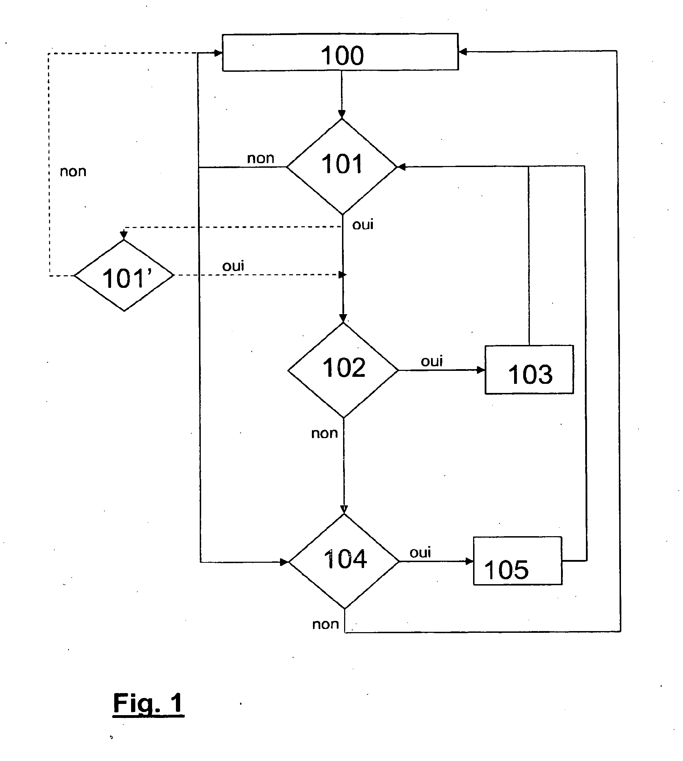

L'invention et ses différentes applications seront mieux comprises à la lecture de la description qui suit et à l'examen de la figure qui l'accompagne. Celles-ci ne sont présentées qu'à titre indicatif et nullement limitatif de l'invention. La figure 1, unique, illustre schématiquement un exemple de mise en oeuvre du procédé selon l'invention.

Pour cet exemple, dans une première étape 100, on considère un véhicule automobile dont les dispositifs projecteurs de type code sont utilisés dans leur configuration classique. D'une façon générale, on procède, dans l'invention, à une étape de décision 101 dans laquelle on détermine si la lumière ambiante présente à proximité du véhicule est une lumière artificielle produite par un courant alternatif. A cet effet, on utilise un capteur approprié qui, associé à un calculateur, est capable d'identifier un tel type de lumière. Un tel capteur est connu de l'état de la technique ; il peut s'agir d'une photodiode, d'une photorésistance, d'un phototransistor ou de tout autre capteur approprié. Les calculateurs qui sont associés à ce type de capteur sont également connus de l'état de la technique. Ils fonctionnent en interprétant le nombre de photons reçus par le capteur auquel ils sont associés, et en déterminant la fréquence de ces réceptions. Une première information, relative à la présence ou à l'absence d'une telle lumière artificielle est ainsi produite et exploitable au sein du véhicule.

Dans l'exemple décrit, si aucune lumière produite par un courant alternatif n'est détectée par le véhicule, on maintient les dispositifs projecteurs code dans leur configuration classique. Si, au contraire, on détecte une lumière produite par un courant alternatif à proximité du véhicule, on passe alors à une étape de décision 102, susceptible de effectivement provoquer la commutation. En tenant compte de la présence ou de l'absence d'une lumière produite par un courant alternatif, on intègre comme paramètre de commutation la première information produite par le capteur.

Dans certains exemples de mise en oeuvre du procédé selon l'invention, on prévoit une étape de décision supplémentaire 101', qui succède directement à l'étape de décision 101 dans le cas où une lumière produite par un courant alternatif est détecté. Dans cette étape 101', on impose des contrôles supplémentaires quant à la nature de la lumière ; ces contrôles supplémentaires peuvent, par exemple, consister en :
- la détermination de la fréquence du courant alternatif produisant la lumière détectée ; on peut ainsi par exemple passer à l'étape de décision 102 uniquement si cette fréquence est supérieure à trente hertz, ou voisine de cinquante hertz ; dans le cas contraire, on maintient les dispositifs projecteurs code dans leur configuration classique ;
- la détermination du niveau d'éclairement au voisinage du véhicule ; par exemple, si celui si est supérieur à trois lux, on passe à l'étape de décision 102 ; dans le cas contraire, on maintient les dispositifs projecteurs code dans leur configuration classique.

L'étape de décision 102 consiste en la détection d'un premier événement qui, s'il se produit, entraîne la commutation, du faisceau lumineux produit par le dispositif projecteur de type code, de la configuration classique à une première configuration spécifique, par exemple spécifique à la circulation en ville. Le premier événement peut par exemple consister en la détection d'une action du conducteur sur une commande prévue pour réaliser manuellement ladite commutation, ou alors une détermination de la vitesse instantanée du véhicule pour savoir si celle-ci est inférieure à une première valeur seuil, par exemple cinquante kilomètres par heure ; si c'est le cas, cette détection - ou cette détermination -, combinée à l'information relative à la présence d'une lumière produite par un courant alternatif, permet de garantir que le véhicule évolue dans une zone urbaine de type agglomération, et on adopte alors la configuration spécifique à la circulation en ville dans une étape 103 ; si ce n'est pas le cas, on passe, dans cet exemple, à une étape de décision suivante 104.

L'étape de décision 104 consiste en la détection d'un deuxième événement qui, s'il se produit, entraîne la commutation, du faisceau lumineux produit par le dispositif projecteur de type code, de la configuration classique à une première configuration spécifique, par exemple spécifique à la circulation sur autoroute. Le deuxième événement peut par exemple consister en la détection d'une action du conducteur sur une commande prévue pour réaliser manuellement ladite commutation, ou alors une détermination de la vitesse instantanée du véhicule pour savoir si celle-ci est supérieure à une deuxième valeur seuil, par exemple cent vingt kilomètres par heure; si c'est le cas, cette détection - ou cette détermination -, combinée à l'information relative à l'absence ou la trop faible présence d'une lumière produite par un courant alternatif, permet de garantir que le véhicule évolue dans une zone de type autoroute, et on adopte alors la configuration spécifique à la circulation sur autoroute dans une étape 105 ; si ce n'est pas le cas, on maintient les dispositifs projecteurs code dans leur configuration classique.

Une fois que les faisceaux lumineux produites par les dispositifs projecteur de type code ont été commutés pour adopter l'une ou l'autre des configurations spécifiques, le procédé est repris à l'étape de décision 101 pour déterminer si la lumière ambiante présente à proximité du véhicule est toujours une lumière artificielle produite par un courant alternatif.

L'ordre des étapes de décision 101, 102 et 104 dans le déroulement de l'exemple qui vient d'être décrit peut bien entendu être modifié : on prévoit, dans certains exemples de mise en oeuvre de l'invention, de procéder d'abord de détecter un événement - autre que la présence de lumière artificielle produite par un courant alternatif - déclencheur de la commutation avant de vérifier une telle présence de lumière pour effectivement autoriser la commutation.

Dans d'autres exemples de mise en oeuvre du procédé selon l'invention, on prévoit soit l'exécution d'une seule des étapes de décision 102 ou 104, ou, au contraire, l'exécution d'étapes de décisions supplémentaires destinées à détecter d'autres événements qui, combinés avec l'information relative à la présence, au voisinage du véhicule, d'une lumière artificielle produite par un courant alternatif, provoque la commutation du faisceau lumineux pour aboutir à une configuration particulière du dispositif projecteur, configuration particulière qui peut notamment correspondre à une fonctionnalité AFS appropriée.

## Revendications

1. Procédé de contrôle d'une opération de commutation de faisceaux lumineux, ladite commutation consistant en un passage d'un premier faisceau lumineux à un deuxième faisceau lumineux suite à la détection d'au moins un événement (102 ;104) déclencheur de la commutation, le premier faisceau lumineux et le deuxième faisceau lumineux étant produits par au moins un dispositif projecteur d'un véhicule automobile, le procédé comportant notamment les différentes étapes consistant à :
- produire (101), au moyen d'un capteur disposé dans, ou sur, le véhicule automobile, une première information relative à une présence ou une absence, au voisinage dudit véhicule, de lumière artificielle produite par un courant alternatif;
- intégrer, comme paramètre de commutation, la première information produite,
**caractérisé en ce que** le premier faisceau lumineux est un faisceau lumineux produit par un dispositif projecteur de type code dans sa configuration classique (100), et **en ce que** le deuxième faisceau lumineux est un faisceau lumineux produit par un dispositif projecteur de type code dans sa configuration spécifique à la circulation sur autoroute (105), l'opération de commutation du premier faisceau lumineux au deuxième faisceau lumineux étant effectuée, suite à la détection d'au moins un événement déclencheur de la commutation, uniquement si la première information produite établit, au voisinage du véhicule, l'absence ou la trop faible présence de lumière artificielle produite par un courant alternatif.

2. Procédé selon la revendication précédente **caractérisé en ce qu'**il comporte les étapes supplémentaires consistant à :
- produire (101'), au sein du véhicule automobile, une deuxième information relative à un niveau, au voisinage dudit véhicule, d'éclairement par de la lumière artificielle produite par un courant alternatif ou relative à une fréquence du courant alternatif produisant la lumière detectée;
- intégrer, comme paramètre de commutation, la deuxième information produite.

3. Procédé selon la revendication 1, **caractérisé en ce que** l'événement déclencheur de la commutation est une détection d'une vitesse instantanée du véhicule supérieure à une valeur seuil.

4. Procédé selon l'une au moins des revendications précédentes **caractérisé en ce que** le capteur produisant la première information est une photodiode, une photorésistance ou un phototransistor.

5. Procédé selon l'une au moins des revendications précédentes **caractérisé en ce que** le capteur produit une information établissant l'absence, au voisinage dudit véhicule, de lumière artificielle produite par un courant alternatif de fréquence supérieure ou égale à trente hertz.

6. Procédé selon l'une au moins des revendications précédentes **caractérisé en ce que** le capteur produit une information établissant l'absence, au voisinage dudit véhicule, de lumière artificielle produite par un courant alternatif de fréquence égale à cinquante hertz, à plus ou moins dix pour cent.

7. Procédé selon la revendication 1 ou la revendication 2, **caractérisé en ce que** l'opération de commutation du premier faisceau lumineux au deuxième faisceau lumineux n'est effectuée que si le niveau, au voisinage dudit véhicule, d'éclairement par de la lumière artificielle produite par un courant alternatif est supérieur à trois lux.

## Claims

1. Method for controlling an operation for switching of light beams, the said switching consisting of passage from a first light beam to a second light beam after detection of at least one event (102; 104) which triggers the switching, the first light beam and the second light beam being produced by at least one headlight device of a motor vehicle, the method comprising in particular the different steps consisting of:
- producing (101) by means of a sensor, which is disposed in or on the motor vehicle, first information relating to a presence or absence in the vicinity of the said vehicle of artificial light produced by an alternating current; and
- integrating as a switching parameter the first information produced, **characterised in that** the first light beam is a light beam which is produced by a headlight device of the low-beam type in its conventional configuration (100), and **in that** the second light beam is a light beam which is produced by a headlight device of the low-beam type in its configuration specific to travel on a motorway (105), the operation of switching the first light beam to the second light beam being carried out after the detection of at least one event which triggers the switching, only if the first information produced establishes, in the vicinity of the vehicle, the absence or insufficient presence of artificial light produced by an alternating current.

2. Method according to the preceding claim, **characterised in that** it comprises the additional steps consisting of:
- producing (101') within the motor vehicle, second information relating to a level in the vicinity of the said vehicle, of lighting by artificial light produced by an alternating current, or relating to a frequency of the alternating current which produces the light detected; and
- integrating as a switching parameter the second information produced.

3. Method according to claim 1, **characterised in that** the event which triggers the switching is detection of an instantaneous speed of the vehicle greater than a threshold value.

4. Method according to at least one of the preceding claims, **characterised in that** the sensor which produces the first information is a photodiode, a photoresistor or a phototransistor.

5. Method according to at least one of the preceding claims, **characterised in that** the sensor produces information which establishes the absence, in the vicinity of the said vehicle, of artificial light produced by an alternating current with frequency of 30 Hz or more.

6. Method according to at least one of the preceding claims, **characterised in that** the sensor produces information which establishes the absence, in the vicinity of the said vehicle, of artificial light produced by an alternating current with frequency equal to 50 Hz, to within plus or minus 10%.

7. Method according to claim 1 or claim 2, **characterised in that** the operation of switching the first light beam to the second light beam is carried out only if the level, in the vicinity of the said vehicle, of lighting by artificial light produced by an alternating current, is greater than 3 Lux.

## Patentansprüche

1. Verfahren zur Überwachung eines Vorgangs zum Umschalten eines Lichtbündels, wobei das Umschalten darin besteht, aufgrund der Erkennung wenigstens eines die Umschaltung auslösenden Vorgangs (102;104) von einem ersten Lichtbündel zu einem zweiten Lichtbündel zu wechseln, wobei das erste Lichtbündel und das zweite Lichtbündel von wenigstens einer Scheinwerfervorrichtung eines Kraftfahrzeugs erzeugt werden, wobei das Verfahren insbesondere die folgenden einzelnen Schritte umfasst:
- Erzeugen (101) einer ersten Information bezüglich des Vorhandenseins oder des Fehlens eines durch Wechselstrom erzeugten Kunstlichts in der Nähe des Fahrzeugs mittels eines im oder am Kraftfahrzeug angeordneten Sensors;
- Einbeziehen der ersten erzeugten Information als Umschaltparameter,
**dadurch gekennzeichnet, dass** das erste Lichtbündel ein Lichtbündel ist, das von einer Scheinwerfervorrichtung vom Typ Abblendlicht in herkömmlicher Ausführung (100) erzeugt wird, und dass das zweite Lichtbündel ein Lichtbündel ist, das von einer Scheinwerfervorrichtung vom Typ Abblendlicht in einer für Autobahnfahrten spezifischen Ausführung (105) erzeugt wird, wobei der Vorgang des Umschaltens vom ersten Lichtbündel zum zweiten Lichtbündel aufgrund der Erkennung wenigstens eines die Umschaltung auslösenden Vorgangs nur dann ausgeführt wird, wenn die erste erzeugte Information ergibt, dass in der Nähe des Fahrzeugs ein durch Wechselstrom erzeugtes Kunstlicht fehlt oder nur schwach vorhanden ist.

2. Verfahren nach dem vorhergehenden Anspruch,
**dadurch gekennzeichnet, dass** es die folgenden zusätzlichen Schritte umfasst:
- Erzeugen (101') einer zweiten Information innerhalb des Fahrzeugs bezüglich eines Grades der Beleuchtungsstärke in der Nähe des Fahrzeugs durch ein durch Wechselstrom erzeugtes Kunstlicht oder bezüglich einer Wechselstromfrequenz, die das erkannte Licht erzeugt;
- Einbeziehen der zweiten erzeugten Information als Umschaltparameter.

3. Verfahren nach Anspruch 1,
**dadurch gekennzeichnet, dass** das die Umschaltung auslösende Ereignis die Erkennung einer über einem Grenzwert liegenden Momentangeschwindigkeit des Fahrzeugs ist.

4. Verfahren nach wenigstens einem der vorhergehenden Ansprüche,
**dadurch gekennzeichnet, dass** der die erste Information erzeugende Sensor eine Fotodiode, ein Fotowiderstand oder ein Fototransistor ist.

5. Verfahren nach wenigstens einem der vorhergehenden Ansprüche,
**dadurch gekennzeichnet, dass** der Sensor eine Information erzeugt, die das Fehlen von Kunstlicht, das durch einen Wechselstrom mit einer Frequenz von größer oder gleich 30 Hertz erzeugt wird, in der Nähe des Fahrzeugs feststellt.

6. Verfahren nach wenigstens einem der vorhergehenden Ansprüche,
**dadurch gekennzeichnet, dass** der Sensor eine Information erzeugt, die das Fehlen von Kunstlicht, das durch einen Wechselstrom mit einer Frequenz von 50 Hertz plus minus 10 Prozent erzeugt wird, in der Nähe des Fahrzeugs feststellt.

7. Verfahren nach Anspruch 1 oder Anspruch 2,
**dadurch gekennzeichnet, dass** der Umschaltvorgang vom ersten Lichtbündel zum zweiten Lichtbündel nur dann ausgeführt wird, wenn der Grad der Beleuchtungsstärke durch ein durch Wechselstrom erzeugtes Kunstlicht in der Nähe des Fahrzeugs über 3 Lux liegt.
